# EUROPÄISCHE PATENTSCHRIFT

(11) **EP 3 228 274 B1**
(45) Veröffentlichungstag und Bekanntmachung des Hinweises auf die Patenterteilung: **05.02.2020**
(21) Anmeldenummer: 17163921.4
(22) Anmeldetag: 30.03.2017
(51) Int. Cl.: A61C 5/77, A61C 13/00

(54) **VERFAHREN ZUM HERSTELLEN EINES DENTALEN WERKSTÜCKS**
METHOD OF MAKING A DENTAL WORKPIECE
PROCÉDÉ DE FABRICATION D'UNE PIÈCE DENTAIRE

(30) Priorität: 06.04.2016 AT 502782016
(43) Veröffentlichungstag der Anmeldung: 11.10.2017
(73) Patentinhaber: STEGER, Heinrich, 39031 Bruneck (IT)
(72) Erfinder: STEGER, Heinrich, 39031 Bruneck (IT)
(74) Vertreter: Torggler & Hofinger Patentanwälte

(56) Entgegenhaltungen:
- EP-A2- 2 147 904
- WO-A1-2005/051220
- US-A1- 2007 048 689

## Beschreibung

Die Erfindung betrifft ein Verfahren zum Herstellen eines dentalen Werkstücks aus einem Rohling mit einer Oberseite und einer Unterseite, wobei das Verfahren unter Verwendung einer zumindest entlang einer Bearbeitungsachse bewegbaren Bearbeitungsvorrichtung durchgeführt wird, mit den Schritten Festlegen zumindest eines Referenzpunkts einer digitalen Rohling-Kontur des Rohlings, Festlegen einer digitalen Werkstück-Kontur des zumindest einen dentalen Werkstücks, Platzieren der digitalen Werkstück-Kontur relativ zum Referenzpunkt, insbesondere in der digitalen Rohling-Kontur, Freistellen eines Freistellbereichs, insbesondere in der digitalen Rohling-Kontur, um die digitale Werkstück-Kontur und Platzieren zumindest eines digitalen Verbindungsstegs im Freistellbereich, wobei der zumindest eine Verbindungssteg mit der digitalen Werkstück-Kontur über eine Übergangsstelle verbunden ist. Zudem betrifft die Erfindung eine Vorrichtung, insbesondere eine CNC-Bearbeitungsmaschine, zum Herstellen eines dentalen Werkstücks aus einem Rohling mit den Merkmalen des Oberbegriffs von Anspruch 13.

In der Dentalbranche ist es üblich beim Herstellen eines Zahnersatzes, sei es ein Abutment, eine Brücke, ein Steg usw. aus einem Rohling, diesen Zahnersatz über Verbindungsstege mit dem restlichen Rohling verbunden zu lassen, damit sobald die letzte Verbindung in der Maschine durchtrennt wird, der Zahnersatz nicht unkontrolliert in die Maschine fällt. Im Stand der Technik wird dazu vorgeschlagen, einen Zahnersatz in Form eines Einzelkäppchens mit mindestens drei Verbindungsstegen zu versehen. Das Verfahren zum Herstellen des dentalen Werkstücks wird dabei softwaretechnisch umgesetzt. Im Speziellen können die digitalen Verbindungsstege zwischen der digitalen Rohling-Kontur und der digitalen Werkstück-Kontur automatisch gesetzt oder auch noch manuell versetzt werden. Es tritt dabei jedoch häufig das Problem auf, dass die Verbindungsstege zu hoch oder zu tief gesetzt werden. Daraus resultiert dann die Problematik, dass Hinterschnitte in späterer Folge nicht hergestellt werden können.

Es gibt zwar bereits Schriften die ein Ergebnis ohne Hinterschnitte zeigen, jedoch werden dafür keine konkreten Schritte angegeben bzw. wird dies eher zufällig erreicht. Hierzu sei auf die EP 1 535 587 A1 (und die im Wesentlichen inhaltsgleiche WO 2005/051220 A1) verwiesen, in welcher sich der umlaufende Steg verfahrensbedingt im Bereich des größten Umfangs des Käppchens, in der Regel an oder nahe an dessen Rand befindet. Auf ähnliche Weise ist in der EP 2 147 904 A1 angeführt, dass die Anbringung der Stege an das Formteil im größten Querschnitt der jeweiligen zahntechnischen Einheit erfolgen sollte, jedoch nicht am Passungsrand einer jeweiligen Krone. Weder die Anbringung am größten Umfang noch die Anbringung im größten Querschnitt garantiert aber, dass Hinterschnitte immer vermieden werden. Zudem ist nicht klar, was genau als größter Umfang bzw. als größter Querschnitt anzusehen ist.

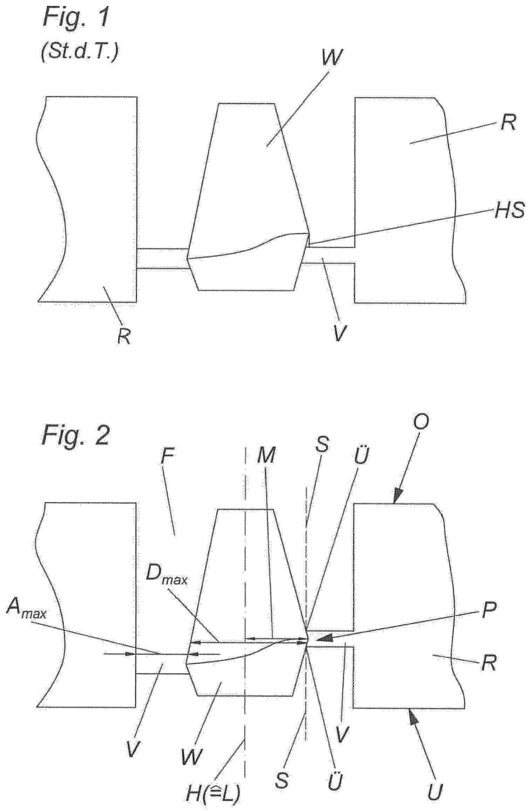

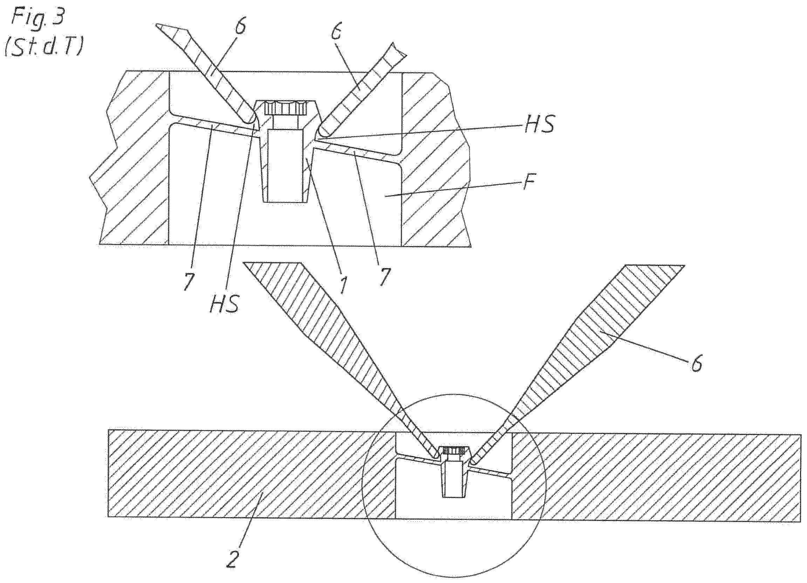

Beispielhaft sei für dieses bekannte Problem der Hinterschnitte auf die Fig. 1 und 3 verwiesen, welche den Stand der Technik veranschaulichen. Aus Fig. 1 geht hervor, dass der rechtsseitige Verbindungssteg V zu weit unten angebracht ist, wodurch sich ein Hinterschnitt HS ergibt. Dieser ist bei der Bearbeitung mit einem Bearbeitungswerkzeug 6 nur schwer oder gar nicht zugänglich. Dies geht auch aus Fig. 3 hervor. Es wäre zwar möglich mit einem entsprechend vergrößerten Freistellbereich F und stark schräg gestellten Bearbeitungswerkzeugen 6 auch den Bereich der Hinterschnitte HS zwischen dem dentalen Werkstück 1 und den Verbindungsstegen 7 zu erreichen, jedoch führt dies zu einem erhöhten Materialverbrauch durch den großen Freistellbereich F und zu einem erhöhten Konstruktionsaufwand sowie großen Platzbedarf für die Bearbeitungswerkzeuge 6 aufgrund der Schrägstellung. Weiters erhöht sich durch das zusätzlich abzutragende Material auch die Bearbeitungszeit. Daraus ergibt sich auch ein höherer Verschleiß der Bearbeitungswerkzeuge 6, welche für gute Fräsergebnisse dementsprechend öfter getauscht werden müssen. Aus der Darstellung gemäß Fig. 3 ist auch erkennbar, dass das Werkstück 1 nur von der Oberseite her komplett bearbeitbar ist. Würde nämlich der Rohling 2 um 180° gedreht werden, so könnte nur ein Teil der Oberfläche des Werkstücks 1 durch die unverändert ausgerichteten Bearbeitungswerkzeuge 6 erreicht und somit bearbeitet werden. Teilbereiche können nicht erreicht werden, da das Bearbeitungswerkzeug 6 vorher am Rand des Freistellbereichs F anstehen würde.

Die Aufgabe der vorliegenden Erfindung besteht daher darin, ein gegenüber dem Stand der Technik verbessertes bzw. eine alternatives Verfahren und eine verbesserte Vorrichtung zu schaffen. Insbesondere sollen die aus dem Stand der Technik bekannten Nachteile behoben werden. Zudem soll eine effizientere, schnellere und weniger aufwändige Arbeitsweise beim Herstellen eines dentalen Werkstücks aus einem Rohling möglich sein.

Dies wird durch ein Verfahren mit den Merkmalen von Anspruch 1 erreicht. Demnach ist erfindungsgemäß der Schritt Ermitteln einer Position an der Werkstück-Kontur für die Übergangsstelle vorgesehen, sodass in einer grafischen Darstellung die Übergangsstelle in einer parallel zur Bearbeitungsachse der Bearbeitungsvorrichtung Sichtlinie von der Oberseite her und von der Unterseite her sichtbar ist, wobei das Platzieren des zumindest einen digitalen Verbindungsstegs in Abhängigkeit der ermittelten Position derart erfolgt, dass der digitale Verbindungssteg mit der digitalen Werkstück-Kontur an der ermittelten Position verbunden wird. Somit wird vermieden, dass unnötige Hinterschnitte entstehen. Vielmehr können alle Bereiche der Werkstück-Kontur durch ein entlang der freien Sichtlinie bewegbares Bearbeitungswerkzeug erreicht werden. Anders ausgedrückt führt also diese Sichtlinie nur durch den Freistellbereich, d. h. die Sichtlinie schneidet die Werkstück-Kontur an keiner Stelle. Die Übergangsstelle ist eine, vorzugsweise ringförmige, Linie, welche den Umfang einer Grenzfläche zwischen Verbindungssteg und Werkstück-Kontur bildet. Die Grenzfläche trennt dabei das (spätere) dentale Werkstück vom (später zu entfernenden) Verbindungssteg.

Bevorzugte Ausführungsbeispiele der vorliegenden Erfindung sind in den abhängigen Ansprüchen angegeben.

Die bisher beschriebenen Schritte des Festlegens, Platzierens und Ermittelns werden allesamt auf Basis von digitalen dreidimensionalen Punktmengen durchgeführt, welche jeweils eine grafische Darstellung der digitalen Rohling-Kontur, der digitalen Werkstück-Kontur und der digitalen Verbindungsstege repräsentieren. Vor allem wenn diese Schritte automatisch durch eine entsprechende Vorrichtung (mit einem Softwareprogramm) durchgeführt werden, muss nicht zwingend eine grafische Darstellung über eine Anzeigevorrichtung erfolgen. Vielmehr kann diese grafische Darstellung rein rechnerisch-logisch berechnet werden ohne angezeigt zu werden. Zur digitalen Rohling-Kontur ist hierzu auszuführen, dass von dieser auch nur ein Referenzpunkt (oder ein Bearbeitungsbereich) in einem Koordinatensystem bekannt sein kann. Vorzugsweise entspricht dieses Koordinatensystem dem Koordinatensystem der Bearbeitungsmaschine. Dieser Referenzpunkt bildet die Ausgangsbasis für die Platzierung der Werkstück-Kontur und für die spätere Bearbeitung. Es muss also nicht die gesamte Rohling-Kontur bekannt sein, sondern es genügt, dass zumindest ein, vorzugsweise genau auf der Oberseite oder Unterseite des späteren Rohlings liegender, Referenzpunkt definiert ist. Somit spielt die genaue Form des später bearbeiteten Rohlings eine geringere Rolle, solange der Rohling den Freistellbereich im Wesentlichen ausfüllt, in welchem Material abgetragen wird. Es sollte vor allem darauf geachtet werden, dass die Höhe des festgelegten Freistellbereichs gleich groß oder größer ist wie die Höhe des beim Bearbeiten verwendeten Rohlings.

Um die Ausgangsbasis für eine mechanische Bearbeitung eines konkreten Rohlings zu schaffen, ist bevorzugt der Schritt Erstellen einer digitalen Bearbeitungs-Datei vorgesehen, welche zumindest den Referenzpunkt der digitalen Rohling-Kontur, die digitale Werkstück-Kontur, den zumindest einen digitalen Verbindungssteg und die relativen Positionsdaten der Werkstück-Kontur, des zumindest einen digitalen Verbindungsstegs und zumindest des Referenzpunkts der Rohling-Kontur, vorzugsweise der gesamten Rohling-Kontur, zueinander enthält. Somit wird eine einzelne digitale dreidimensionale Punktmenge erzeugt, welche die wesentlichen Informationen über die spätere Form des Rohlings samt Werkstück enthält.

Für die konkrete mechanische Bearbeitung ist bevorzugt der Schritt Erzeugen, vorzugsweise Fräsen, des dentalen Werkstücks durch eine, vorzugsweise zumindest entlang der Bearbeitungsachse axial bewegbare Bearbeitungsvorrichtung aus einem in einer Haltevorrichtung eingespannten Rohling auf Basis der Bearbeitungs-Datei vorgesehen. Über die Bearbeitungsachse an sich wird meist nur eine Zustellbewegung der Bearbeitungsvorrichtung durchgeführt. Deswegen ist bevorzugt vorgesehen, dass die Bearbeitungsvorrichtung entlang mehrerer Achsen, vorzugsweise entlang dreier Achsen, bewegbar ist.

Die in dieser Beschreibung angeführten Merkmale des Rohlings bzw. des dentalen Werkstücks gelten - sofern logisch sinnvoll - sowohl für den konkreten, bearbeitbaren Rohling als auch für den digitalen Rohling in Form einer dreidimensionalen Punktwolke. Der konkrete Rohling kann aus den verschiedensten, in der Dentalbranche gängigen Materialien bestehen. Das sind zum Beispiel Zirkonoxid, Metalllegierungen, Kunststoffe, Wachs, Keramiken, usw.

So ist bevorzugt vorgesehen, dass der Rohling eine quer, vorzugsweise rechtwinkelig, zur Oberseite oder zur Unterseite ausgerichtete Hauptachse aufweist. Besonders bevorzugt ist die Hauptachse rechtwinkelig zur Oberseite und zur Unterseite ausgerichtet. Dagegen ist die, die Oberseite und Unterseite verbindende, ringförmige Stirnseite (Mantelfläche) parallel zur Hauptachse ausgerichtet. Dadurch ergibt sich, dass der Rohling bzw. die digitale Rohling-Kontur scheibenförmig ausgebildet ist. Im Speziellen ist der Rohling im Wesentlichen in Form eines geraden Kreiszylinders ausgebildet. "Im Wesentlichen" bedeutet in diesem Zusammenhang, dass auch bereichsweise Vertiefungen (oder auch Erhöhungen) vorgesehen sein können, welche dem besseren Halt und der richtigen Positionierung beim Einspannen des Rohlings dienen. Die Form des Rohlings kann aber auch different ausfallen, so zum Beispiel als Würfel oder Vieleck.

Auch die Werkstück-Kontur kann bevorzugt eine zentrale Längsachse aufweisen. An sich kann die Werkstück-Kontur beliebig in der Rohling-Kontur ausgerichtet werden. Bevorzugt ist allerdings vorgesehen, dass die digitale Werkstück-Kontur, Längsachse im Fall eines Abutments, parallel zur Bearbeitungsachse, besonders bevorzugt auch parallel zur Hauptachse der Rohling-Kontur, ausgerichtet ist. In Hinblick auf diese zentrale Längsachse kann der Erfindungsgedanke auch dadurch ausgedrückt werden, dass der zumindest eine Verbindungssteg an einer Stelle der digitalen Werkstück-Kontur platziert wird, welche an einem Umfang einer durch die zentrale Längsachse führenden Schnittfläche durch die digitale Werkstück-Kontur angeordnet ist und einen Maximalabstand zur zentralen Längsachse der digitalen Werkstück-Kontur aufweist. Durch diese Anordnung im Bereich des Maximalabstands wird das Bilden von Hinterschnitten vermieden. Natürlich können aber in anderen, versetzt angeordneten und durch die zentrale Längsachse führenden Schnittflächen durchaus größere Maximalabstände gegeben sein.

Für eine schnellere Arbeitsweise kann bevorzugt vorgesehen sein, dass die Schritte Freistellen des Freistellbereichs und Platzieren des zumindest einen Verbindungsstegs gleichzeitig erfolgen. Beispielsweise kann die genaue Positionierung des Werkstücks im Rohling schon von einer Bearbeitungssoftware automatisiert erfolgen, welche unter anderem den bestmöglichen Platz im Rohling ermittelt. So kann die Software beim Einfügen mehrerer Werkstück-Konturen bereits die effizienteste Anordnung berechnen. Generell sind bei diesen Schritten der Bearbeitungsdateierstellung verschiedenste Möglichkeiten denkbar, welche zur Realisierung dieser sinnvoll sind.

Bevorzugt ist vorgesehen, dass der zumindest eine digitale Verbindungssteg die digitale Werkstück-Kontur mit der digitalen Rohling-Kontur verbindet. In einer Ausführungsvariante sind ein bis vier Verbindungsstege zwischen dem Rohling und dem Werkstück angeordnet. Alternativ kann auch vorgesehen sein, dass der wenigstens eine digitale Verbindungssteg als Verbindungsring ausgebildet ist, welcher die digitale Werkstück-Kontur ringförmig umgibt. Dieser Verbindungsring ist dabei entlang des bereits beschriebenen Maximalabstands um die Werkstück-Kontur herum angeordnet. Dadurch kann dieser Verbindungsring eine gewölbte Form aufweisen. Wenn der wenigstens eine digitale Verbindungssteg als Verbindungsring ausgebildet ist, dann ist die Übergangsstelle in Form von zwei ringförmige, im Wesentlichen parallel zueinander angeordnete Linien ausgebildet, welche die ringförmige Grenzfläche zwischen Verbindungsring und Werkstück-Kontur begrenzen. Bevorzugt liegt der Verbindungsring über die ringförmige Grenzfläche voll umfänglich an der digitalen Werkstück-Kontur an. Für eine einfache Bearbeitung können aber auch zusätzliche Durchbrüche im Verbindungsring ausgebildet sein, sodass der Verbindungsring nur in ausgewählten Teilbereichen an der Werkstück-Kontur anliegt. Dies erleichtert in weiterer Folge auch das Heraustrennen aus dem Rohling.

Um einen möglichst geringen Materialverbrauch zu haben und aus einem Rohling möglichst viele dentale Werkstücke herausarbeiten zu können, ist bevorzugt vorgesehen, dass der maximale Abstand zwischen digitaler Rohling-Kontur und der Übergangsstelle - gemessen rechtwinkelig zur Bearbeitungsachse - 5 mm, vorzugsweise 3 mm, beträgt. Dieser Platz reicht meist aus, um mit einem Bearbeitungswerkzeug die Werkstück-Kontur entsprechend aus dem Rohling heraufzuarbeiten. Dieser Bereich richtet sich nach dem verwendeten Bearbeitungswerkzeug und dessen maximalen Durchmesser, welcher in den Freistellbereich eindringen muss. So benötigt man für einen Bearbeitungswerkzeugdurchmesser von 3 mm einen Freistellbereich von bevorzugt 3,5 mm Breite. Bei einem Bearbeitungswerkzeugdurchmesser von maximal 1 mm kann auch ein Freistellbereich mit einer Breite von bevorzugt 1,5 mm vorgesehen sein. Zu diesem Zweck kann auch vorgesehen sein, dass das Verhältnis des rechtwinkelig zur Bearbeitungsachse gemessenen, maximalen Abstands zwischen der Übergangsstelle und der Innenseite des Freistellbereichs der digitalen Rohling-Kontur zum rechtwinkelig zur Bearbeitungsachse gemessenen, maximalen Durchmesser der digitalen Werkstück-Kontur bei zumindest 1 zu 2, vorzugsweise bei zumindest 1 zu 3, liegt. Anders ausgedrückt ist der Spalt zwischen digitaler Werkstück-Kontur und digitaler Rohling-Kontur maximal halb so groß wie der Durchmesser der digitalen Werkstück-Kontur. Der hier erwähnte maximale Durchmesser muss nicht der maximale Durchmesser der gesamten Werkstück-Kontur sein sondern entspricht bevorzugt dem maximalen Durchmesser in einer Schnittansicht der Werkstück-Kontur, oder anders ausgedrückt dem maximalen Abstand zwischen zwei Punkte der Werkstück-Kontur-Oberfläche.

Für die Vorrichtung zum Herstellen eines digitalen Werkstücks aus einem Rohling werden die erfindungsgemäßen Probleme dadurch gelöst, dass in einem Positionsermittlungs-Betriebsmodus der Steuer- oder Regeleinheit die Position der Übergangsstelle an der Werkstück-Kontur ermittelbar ist, sodass in einer grafischen Darstellung die Übergangsstelle in einer parallel zur Bearbeitungsachse der Bearbeitungsvorrichtung ausgerichteten Sichtlinie von der Oberseite her und von der Unterseite her sichtbar ist, wobei im Verbindungsstegplatzierungs-Betriebsmodus der Steuer oder Regeleinheit in Abhängigkeit der ermittelten Position der digitale Verbindungssteg mit der digitalen Werkstück-Kontur an der ermittelten Position verbindbar ist.

Die bevorzugten Ausführungsbeispiele des Verfahrens gelten sinngemäß auch für die Vorrichtung (und umgekehrt). Bevorzugt ist beispielsweise vorgesehen, dass in einem Dateierstellungs-Betriebsmodus der Steuer- oder Regeleinheit eine digitale Bearbeitungs-Datei erstellbar ist, welche zumindest den Referenzpunkt der digitalen Rohling-Kontur, die digitale Werkstück-Kontur, den zumindest einen digitalen Verbindungssteg und die relativen Positionsdaten zumindest des Referenzpunkts der Rohling-Kontur, der Werkstück-Kontur und des zumindest einen digitalen Verbindungsstegs zueinander enthält.

Weiters ist gemäß einem bevorzugten Ausführungsbeispiel vorgesehen, dass in einer Haltevorrichtung der Rohling eingespannt bzw. einspannbar ist, wobei das dentale Werkstück auf Basis der Bearbeitungs-Datei von der Bearbeitungsvorrichtung aus dem Rohling herausarbeitbar, vorzugsweise spanabhebend bearbeitbar, ist. Bevorzugt erfolgt die Bearbeitung durch Fräsen. Es können aber auch anderweitige materialabtragende Verfahren zur Anwendung kommen.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: schematisch einen Hinterschnitt zwischen einem Werkstück und einem Verbindungssteg nach dem Stand der Technik,
- Fig. 2: schematisch ein Werkstück samt Verbindungssteg ohne Hinterschnitt,
- Fig. 3: Schnittdarstellungen beim Bearbeiten eines Rohlings mit Hinterschnitt nach dem Stand der Technik,
- Fig. 4: Schnittdarstellungen beim Bearbeiten eines Rohlings ohne Hinterschnitte,
- Fig. 5 bis 8: schematisch die einzelnen Ablaufschritte beim Herstellen des dentalen Werkstücks mit den entsprechenden Betriebsmodi der Steuer- oder Regeleinheit,
- Fig. 9: perspektivische Ansichten einer CAD/CAM-Bearbeitungsmaschine,
- Fig. 10 bis 16: verschiedene Ansichten eines Rohlings mit einem Verbindungsring in verschiedenen Positionen,
- Fig. 17 und 18: in perspektivischen Ansichten die zueinander nicht parallel ausgerichteten Achsen Längsachse und Hauptachse und
- Fig. 19: in perspektivischen Ansichten einen Rohling mit einem Werkstück in Form einer dreigliedrigen Brücke.

Im direkten Vergleich zu Fig. 1 ist in Fig. 2 die vorliegende Erfindung auf einem Blick veranschaulicht. Es ist erkennbar, dass der rechtsseitige digitale Verbindungssteg V im Bereich des größten, rechtwinkelig zur zentralen Längsachse L gemessenen Maximalabstands M der Werkstück-Kontur W zur zentralen Längsachse L angeordnet ist. In diesem Fall entspricht die zentrale Längsachse L auch der Hauptachse H der digitalen Rohling-Kontur R (dies muss aber nicht immer der Fall sein, da die Werkstück-Kontur W auch schräg angeordnet sein kann). Diese Achsen H und L sind in diesem Fall auch parallel zur (hier nicht eingezeichneten) Bearbeitungsachse Z. Jedenfalls werden die Positionen P der Verbindungsstege V so gewählt, dass in der veranschaulichten grafischen Darstellung die Übergangsstellen Ü in einer parallel zur Bearbeitungsachse Z und zur Hauptachse H ausgerichteten Sichtlinie S von der Oberseite O her und von der Unterseite U her sichtbar sind. Dadurch werden Hinterschnitte (siehe Fig. 1) vermieden. Bearbeitungswerkzeuge 6 können somit sämtliche Bereiche der Oberfläche der des dentalen Werkstücks 1 nur durch Bewegungen entlang der bzw. parallel zur Sichtlinie S erreichen. Dadurch kann auch der Freistellbereich F klein gehalten werden. Dies kommt zum Beispiel dadurch zum Ausdruck, dass das Verhältnis des rechtwinkelig zur Bearbeitungsachse Z (ident mit der Hauptachse H) gemessenen, maximalen Abstands Aₘₐₓ zwischen der Übergangsstelle Ü und der Innenseite der digitalen Rohling-Kontur R zum rechtwinkelig zur Bearbeitungsachse Z gemessenen, maximalen Durchmesser Dₘₐₓ der digitalen Werkstück-Kontur W in diesem Fall ziemlich genau bei 1 zu 2 liegt.

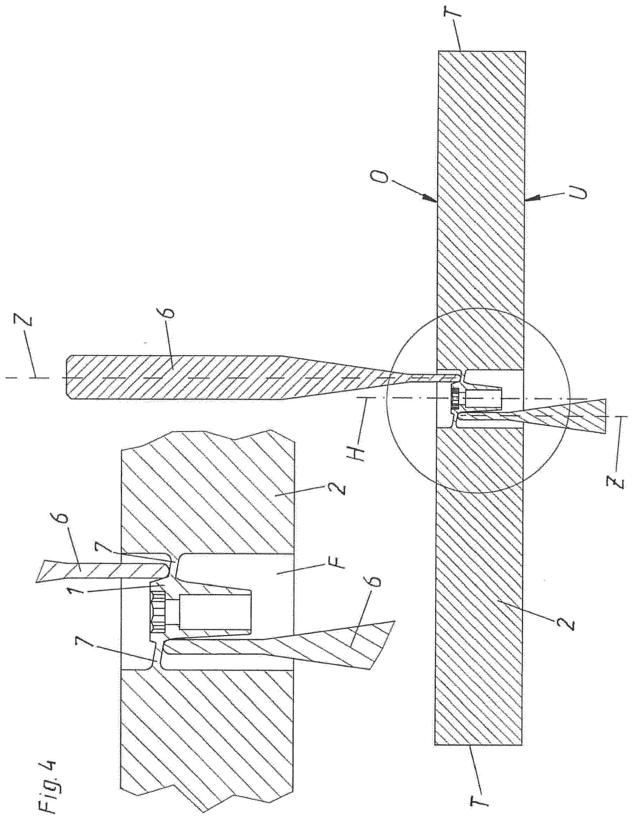

Auch in Fig. 4 ist dieser relativ kleine Freistellbereich F nochmals veranschaulicht. Der Spalt zwischen dem Rohling 2 und dem dentalen Werkstück 1 kann sehr gering gehalten werden, die Bearbeitungswerkzeuge 6 können aber immer noch die Oberfläche des dentalen Werkstücks 1 gut erreichen. In Fig. 4 ist auch gut erkennbar, dass die Oberseite O und die Unterseite U des Rohlings 2 rechtwinkelig zur Hauptachse H und zur Bearbeitungsachse Z der Bearbeitungsvorrichtung 3 ausgerichtet sind. Die die Oberseite O mit der Unterseite U verbindende, den Rohling 2 seitlich begrenzende Stirnseite T ist dagegen parallel zur Hauptachse H ausgerichtet.

Der Ablauf des Verfahrens zum Herstellen eines dentalen Werkstücks 1 aus einem Rohling 2 wird anhand der im Folgenden beschriebenen Zeichnungen näher erläutert.

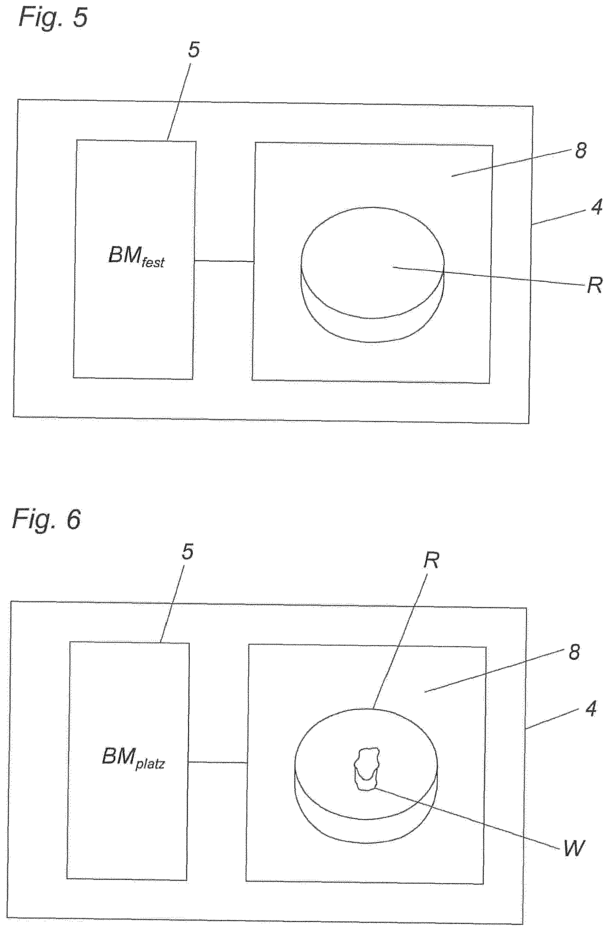

In Fig. 5 ist eine Anzeigevorrichtung 8 (Bildschirm) dargestellt, welche Teil einer Vorrichtung 4 zum Herstellen eines dentalen Werkstücks 1 ist. Eine solche Vorrichtung 4 kann beispielsweise eine CAD/CAM-Bearbeitungsmaschine, sein. Diese Vorrichtung 4 weist eine Steuer- oder Regeleinheit 5, von welcher ein Softwareprogramm ausführbar ist. Die entsprechenden Ablaufschritte des von Steuer- oder Regeleinheit 5 ausführbaren Programms sind auf der Anzeigevorrichtung 8 anzeigbar. Beispielsweise kann nur ein Referenzpunkt (und gegebenenfalls die Hauptachse H) der Rohling-Kontur R oder ein Bearbeitungsbereich der Rohling-Kontur R definiert und angezeigt werden. Bevorzugt ist auf der Anzeigevorrichtung 8 eine, im Wesentlichen vollständige, digitale Rohling-Kontur R dargestellt, welche von einem Zahntechniker in einem Festlegungs-Betriebsmodus BM_{fest} der Steuer- oder Regeleinheit 5 aus einer virtuellen Bibliothek auswählbar bzw. festlegbar ist. Die virtuelle Bibliothek enthält verschiedene Formen, Materialien, usw. für digitale Rohlings-Konturen R.

Anschließend wird gemäß Fig. 6 in einem Platzierungs-Betriebsmodus BM_{platz} der Steuer- oder Regeleinheit 5 eine ebenfalls vorher erstellte bzw. generierte digitale Werkstück-Kontur W ausgewählt und relativ zum Referenzpunkt, vorzugsweise in der digitalen Rohling-Kontur R, platziert. Die virtuell vorliegende dentale Konstruktion (digitale Werkstück-Kontur W) wird mit der Rohling-Kontur R bzw. dessen Referenzpunkt in einen virtuellen Raum gelegt und wie erforderlich zueinander positioniert.

Anschließend kann über einen Befehl die dentale Konstruktion freigestellt werden, sofern dies nicht automatisch erfolgt. Im Speziellen wird in einem Freistell-Betriebsmodus BM_{frei} der Steuer- oder Regeleinheit 5 ein Freistellbereich F der digitalen Rohling-Kontur R um die digitale Werkstück-Kontur W erzeugt. Das bedeutet, dass dieser Freistellbereich F aus der digitalen Rohling-Kontur R virtuell entfernt wird.

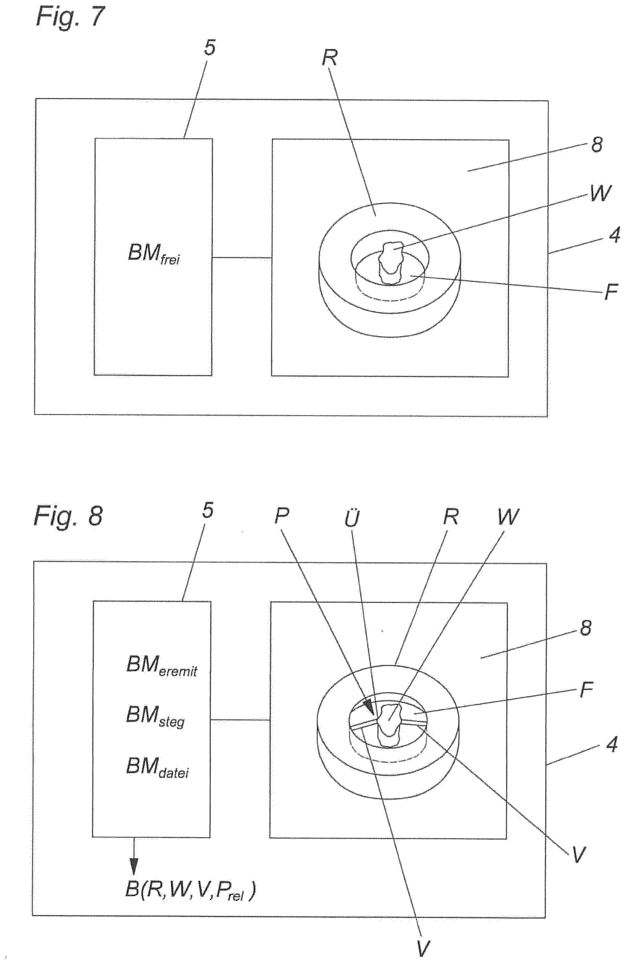

In weiterer Folge werden dann die Verbinder (digitale Verbindungsstege V) gemäß Fig. 8 gesetzt. Dies kann manuell oder automatisch erfolgen. Zunächst wird in einem Positionsermittlungs-Betriebsmodus BMₑᵣₘᵢₜ der Steuer- oder Regeleinheit 5 die Position P der Übergangsstelle Ü an der Werkstück-Kontur W ermittelt. Dadurch ist in einer grafischen Darstellung die Übergangsstelle Ü in einer parallel zur Hauptachse H (sofern die Bearbeitungsachse Z parallel zu dieser Hauptachse H ist) ausgerichteten Sichtlinie S von der Oberseite O her und von der Unterseite U her sichtbar. Anschließend wird in einem Verbindungsstegplatzierungs-Betriebsmodus BM_{steg} der Steuer oder Regeleinheit 5 in Abhängigkeit der ermittelten Position P der digitale Verbindungssteg V mit der digitalen Werkstück-Kontur W an der ermittelten Position P über die Übergangsstelle Ü verbunden. Dies erfolgt bevorzugt so, dass der Verbindungssteg V normal, also im 90°-Winkel, an die Rohling-Kontur R anschließt. Dann wird in einem Dateierstellungs-Betriebsmodus BM_{datei} der Steuer- oder Regeleinheit 5 eine digitale Bearbeitungs-Datei B erstellt. Diese enthält die digitale Rohling-Kontur R, die digitale Werkstück-Kontur W, den zumindest einen digitalen Verbindungssteg V und die relativen Positionsdaten Pᵣₑₗ der Rohling-Kontur R, der Werkstück-Kontur W und des zumindest einen digitalen Verbindungsstegs V zueinander.

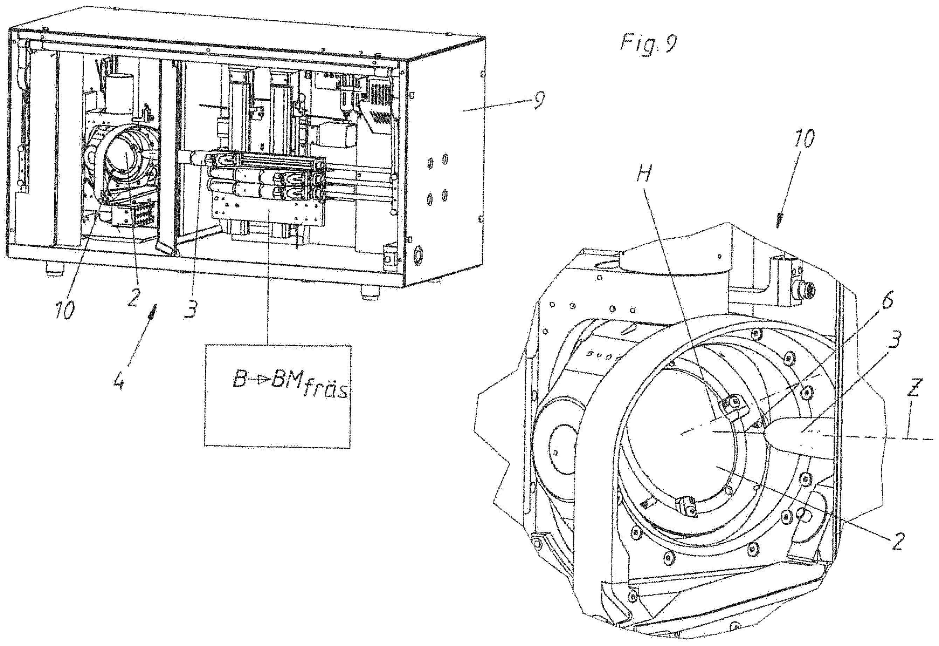

In Fig. 9 ist eine konkrete Vorrichtung 4 in Form einer CNC-Bearbeitungsmaschine, insbesondere in Form einer CAD/CAM-Bearbeitungsmaschine, mit einem Gehäuse 9, einer Bearbeitungsvorrichtung 3, einer relativ zum Gehäuse 9 und zur Bearbeitungsvorrichtung 3 bewegbaren Haltevorrichtung 10 und einem in der Haltevorrichtung 10 eingespannten Rohling 2 dargestellt. Die Bearbeitungsachse Z der Bearbeitungsvorrichtung 3 ist in dieser Darstellung schräg zur Hauptachse H des Rohlings 2 ausgerichtet. Aus diesem Rohling 2 wird von der Bearbeitungsvorrichtung 3 in einem Bearbeitungs-Betriebsmodus BM_{fräs} das dentale Werkstück 1 auf Basis der vorher generierten Bearbeitungs-Datei B herausarbeitet, vorzugsweise herausgefräst.

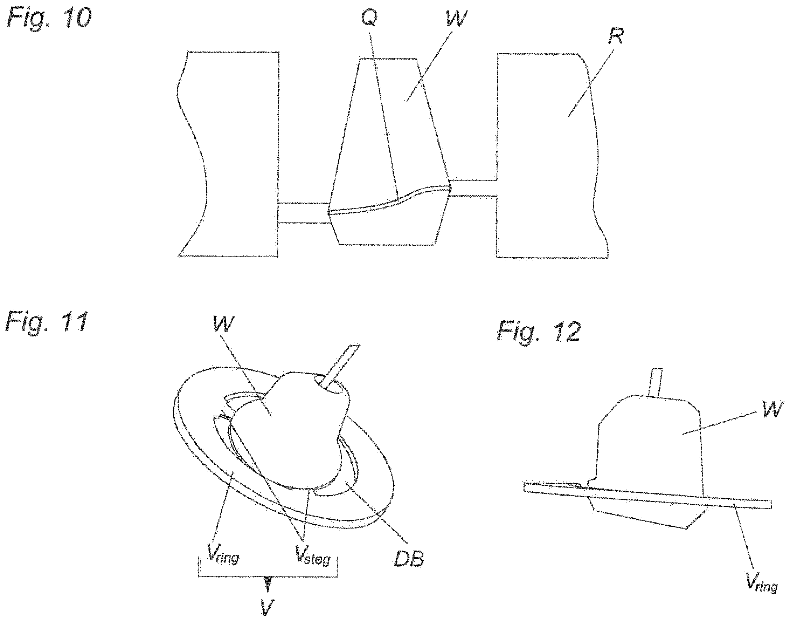

Wie bereits erwähnt, können nicht nur mehrere separate Verbindungsstege V gesetzt werden, sondern es wird ein Verbindungssteg V in Form eines Verbindungsrings gesetzt und um die digitale Werkstück-Kontur W gelegt bzw. an diese angelegt. Dieser Verbindungsring sollte automatisch an der größten Querschnittsfläche Q der digitalen Werkstück-Kontur W angelegt. Diese Fläche Q kann auch dreidimensional gekrümmt sein, wie beispielsweise die an Fig. 2 angelehnte Fig. 10 veranschaulicht. In diesem Beispiel würde sich der Verbindungsring V_{ring} dann genau entlang der umlaufenden Kante bewegen und die Werkstück-Kontur W umschließen. Somit gäbe es keinen direkten Durchbruch mehr zwischen der Oberseite O und unter Unterseite U außerhalb einer dentalen Restauration. Es muss dadurch weniger Material abgetragen werden. Zudem bringt dies auch Zeitersparnis.

Nachdem bei der Bearbeitung auf diese Geometrie gemäß Fig. 10 das entsprechende Material des Rohlings 2 abgetragen wurde, kann dann vorgesehen sein, dass ein Durchbruch DB geschaffen wird, um ein späteres heraustrennen zu erleichtern. Dies ist in den Fig. 11 und 12 veranschaulicht, wonach sich der Verbindungssteg V aus dem Verbindungsring V_{ring} und den Stegbereichen V_{steg} zusammensetzt. Dadurch, dass immer ein umlaufender Verbindungsring V_{ring} stehen bleibt, treten während der Bearbeitung verminderte Schwingungen des dentalen Werkstücks 1 auf. Die Durchbrüche DB werden erst in einem letzten Schritt generiert bzw. erstellt.

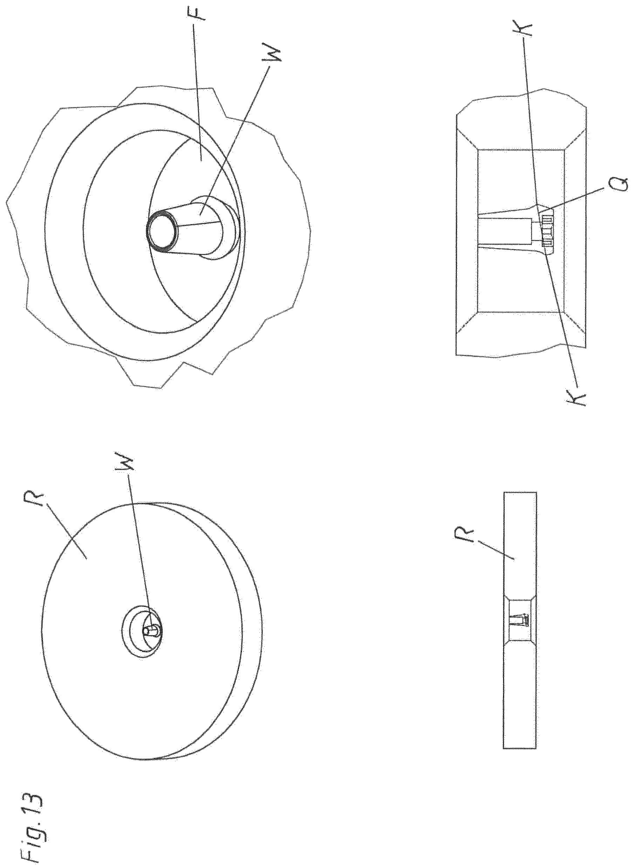

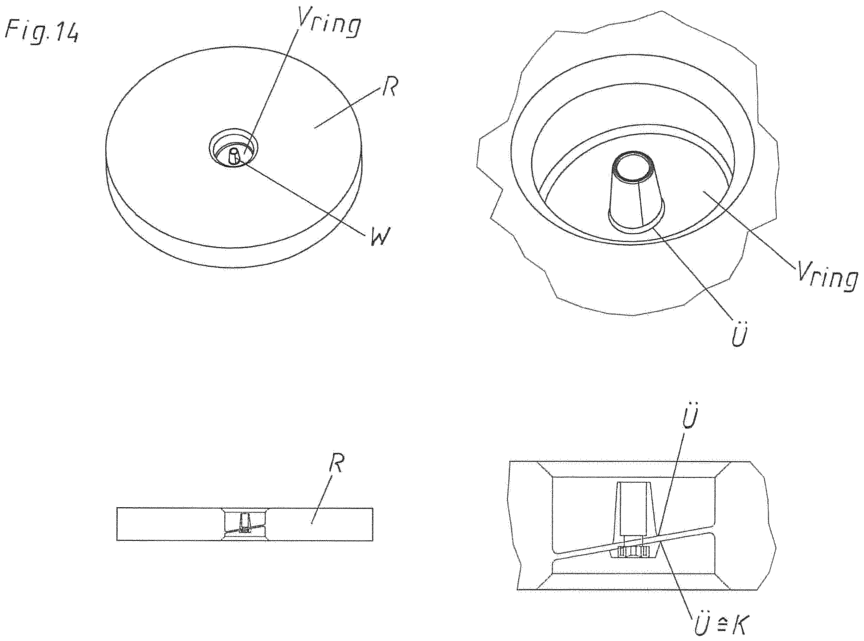

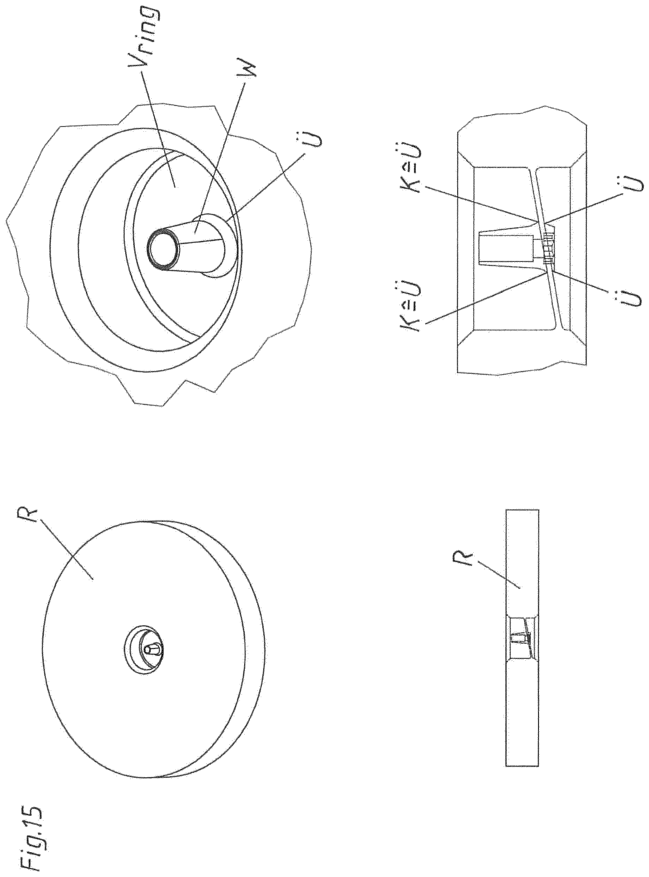

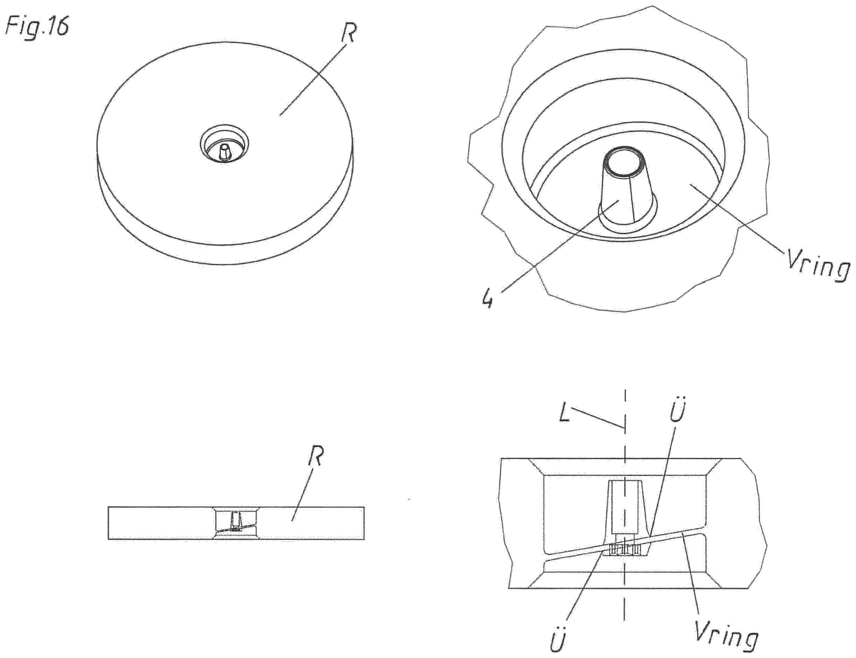

Weitere Features der Steuer- oder Regeleinheit 5 könnten sein, dass man noch auswählen kann, dass der Verbindungs V_{ring} mit seiner definierten oder variabel verstellbaren Stärke bzw. Dicke genau mittig entlang der Kante K der größten Querschnittsfläche Q gelegt wird oder dass die Oberkante oder Unterkante (also eine der parallelen Linien der Übergangsstelle Ü) des Verbindungsrings V_{ring} bündig mit der Kante K abschließt. Es kann auch eine variable Positionsverstellung vorgesehen sein, doch sollte der Verbindungsrings V_{ring} mit seiner Kontaktfläche (Grenzfläche) immer die an der Werkstück-Kontur W umlaufende Kante durchgehend berühren. Dies wird zunächst mit Fig. 13 veranschaulicht, wonach die digitale Werkstück-Kontur W (in Form eines Abutments) frei in der Rohling-Kontur R platziert ist. Gemäß Fig. 14 erstreckt sich der Verbindungsrings V_{ring} von der breitesten Abutmentkante K nach oben. Umgekehrt verhält es sich mit Fig. 15, wo sich der Verbindungsrings V_{ring} von der breitesten Abutmentkante K nach unten erstreckt. Schließlich zeigt Fig. 16 noch die Situation, wenn sich der Verbindungsrings V_{ring} von der am weitesten von der Längsachse L beabstandete Abutmentkante K gleichmäßig nach oben und unter erstreckt. Es kann auch ein Modus vorgesehen sein, bei dem der Verbindungsring V_{ring} frei vom Anwender platziert wird, auch wenn dabei Hinterschnitte entstehen.

Die Ausführung als umlaufender Verbindungsring V_{ring} kann neben Arbeiten aus Materialien wie Zirkonoxid, Kunststoffe, Keramiken, Wachs, usw. oder Metalllegierungen wie CrCo vor allem bei Arbeiten aus Sintermetall zur Anwendung kommen. Hierzu kann beispielsweise auf die EP 2 974 689 A1 verwiesen werden, bei der das Zahnelement über Stege mit dem Basiselement verbunden ist. Anstelle dieser Stege kann aber auch eine verbindende Fläche, wie der durchgehende Verbindungsring V_{ring}, vorgesehen sein. So können die auftretenden Verzugskräfte beim Sintern reduziert werden.

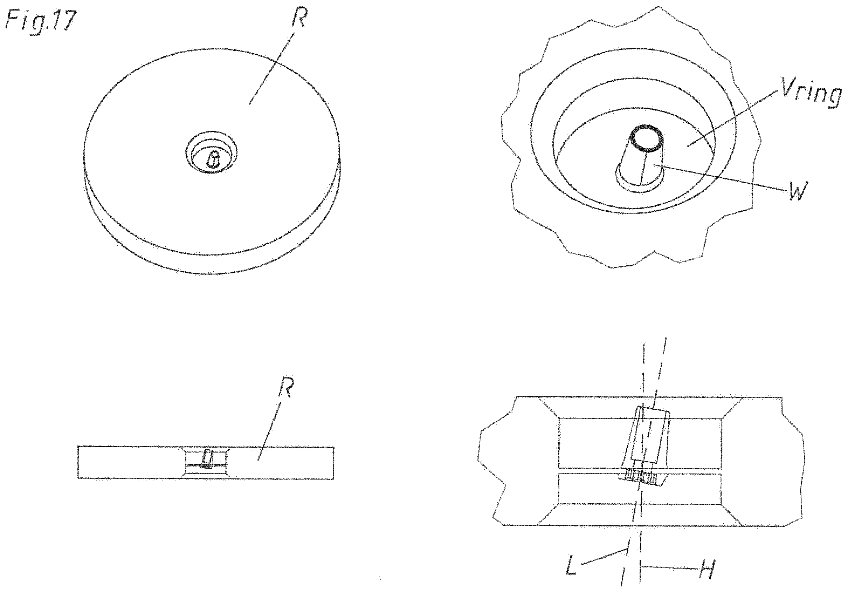

In Fig. 17 ist noch veranschaulicht, dass die zentrale Längsachse L der Werkstück-Kontur W nicht parallel zur Hauptachse H der Rohling-Kontur R ausgerichtet sein muss.

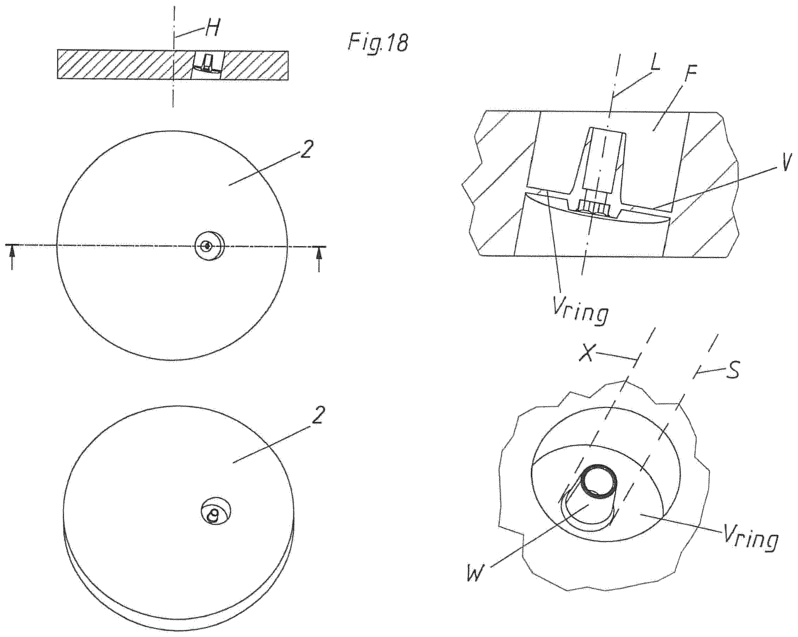

Aus Fig. 18 geht hervor, dass der gesamte Freistellbereich F schräg zur Hauptachse H aber parallel zur Längsachse L der Werkstück-Kontur W ausgerichtet ist. Dies kann der Fall sein, wenn Bearbeitungsachse Z der Bearbeitungsvorrichtung 3 (Bearbeitungsspindel) in einem Winkel von in diesem Fall ca. 80° zur Oberfläche des Rohlings 2 steht. Somit ist in einem Dreiachsbetrieb die Sichtlinie S parallel zur Bearbeitungsachse Z. Dreiachsbetrieb bedeutet, dass sich die Bearbeitungsvorrichtung 3 samt Bearbeitungswerkzeug und Haltevorrichtung 10 in drei Richtungen relativ zueinander bewegen können, wie aus dem Stand der Technik hinreichend bekannt ist.

Wenn sich das Werkstück 1 oberhalb oder unterhalb der Übergangsstelle Ü zumindest auf einer Seite nicht nur verjüngt, kann - trotz Anwendung der vorliegenden Erfindung - auch mit zusätzlichen Bewegungsachsen gearbeitet werden, um Hinterschnitte herstellen zu können. Es können aber auch Werkzeuge wie T-Fräser oder Kugelkopffräser verwendet werden.

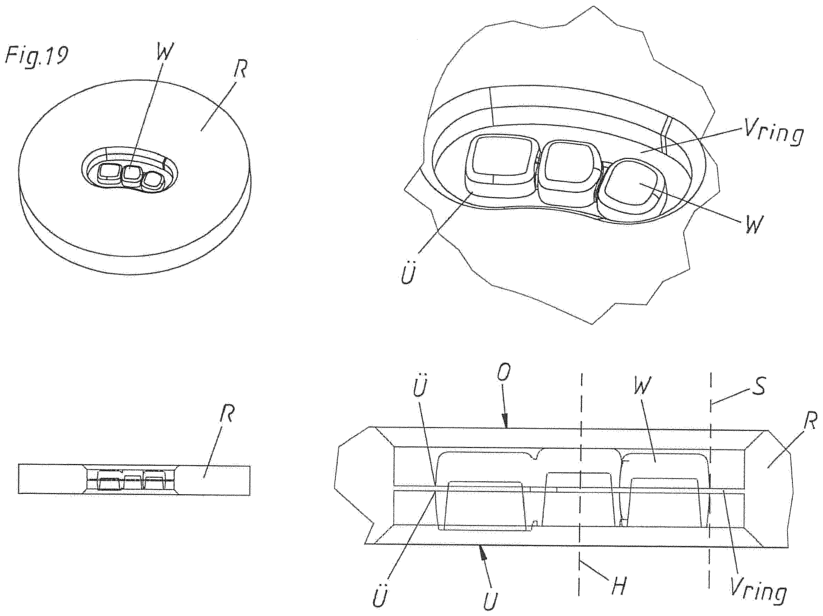

Fig. 19 zeigt, dass das zugrunde liegende Prinzip auch auf andere dentale Konstruktionen angewendet werden kann. In diesem Fall ist bildet die digitale Werkstück-Kontur W eine dreigliedrige Brücke. Auch in diesem Fall wird der Verbindungsrings V_{ring} so angeordnet, dass in einer grafischen Darstellung die Übergangsstelle Ü in einer parallel zur Hauptachse H ausgerichteten Sichtlinie S von der Oberseite O her und von Unterseite U her sichtbar ist. Die Sichtlinie S verläuft wiederum parallel zur Bearbeitungsachse Z des nicht dargestellten Bearbeitungswerkzeugs 6.

Generell wird das dentale Werkstück 1 in einem Raum gefräst, welcher durch ein festgelegtes Koordinatensystem relativ zur Bearbeitungsmaschine (Vorrichtung 4) definiert ist. Wenn also kein Rohling 2 eingespannt ist, fährt die Bearbeitungsvorrichtung 3 die Fräsbahnen (entspricht im Wesentlichen dem gesamten Freistellbereich F) einfach im mit Luft gefüllten Raum. Da für das Fahren dieser Fräsbahnen die eigentliche Form des Rohlings 2 somit keine große Rolle spielt, muss lediglich festgelegt werden, in welcher Höhe die Bearbeitungsmaschine mit der Bearbeitung beginnen muss. Dies ist der Referenzpunkt. Es kann aber auch ein ganzer Bearbeitungsbereich festgelegt werden. Somit "weiß" die Bearbeitungsmaschine, wo die Bearbeitung stattfinden muss. Bei der konkreten Bearbeitung wird dann der Rohling 2 entsprechend platziert, ohne dass die Bearbeitungsmaschine die genaue Form des Rohlings 2 kennen muss. Für eine präzise Bearbeitung ist dies aber sicher von Vorteil.

### Bezugszeichenliste

- 1: dentales Werkstück
- 2: Rohling
- 3: Bearbeitungsvorrichtung
- 4: Vorrichtung zum Herstellen eines dentalen Werkstücks
- 5: Steuer- oder Regeleinheit
- 6: Bearbeitungswerkzeug
- 7: Verbindungssteg
- 8: Anzeigevorrichtung
- 9: Gehäuse
- 10: Haltevorrichtung
- R: Rohling-Kontur
- U: Unterseite
- O: Oberseite
- T: Stirnseite
- H: Hauptachse
- W: Werkstück-Kontur
- F: Freistellbereich
- V: Verbindungssteg
- Ü: Übergangsstelle
- HS: Hinterschnitt
- P: Position
- S: Sichtlinie
- B: Bearbeitungs-Datei
- Pᵣₑₗ: relative Positionsdaten
- L: zentrale Längsachse
- M: Maximalabstand zur Längsachse
- Aₘₐₓ: maximale Abstand zwischen R und Ü
- Dₘₐₓ: maximaler Durchmesser von W
- BM_{fest}: Festlegungs-Betriebsmodus
- BM_{platz}: Platzierungs-Betriebsmodus
- BM_{frei}: Freistell-Betriebsmodus
- BM_{steg}: Verbingsstegplatzierungs-Betriebsmodus
- BMₑᵣₘᵢₜ: Positionsermittlungs-Betriebsmodus
- BM_{datei}: Dateierstellungs-Betriebsmodus
- DB: Durchbruch
- V_{ring}: Verbindungsring
- V_{steg}: Stegbereich
- K: Kante
- Z: Bearbeitungsachse

## Patentansprüche

1. Verfahren zum Herstellen eines dentalen Werkstücks (1) aus einem Rohling (2), der eine Oberseite (O) und eine Unterseite (U) aufweist, wobei das Verfahren unter Verwendung einer zumindest entlang einer Bearbeitungsachse (Z) bewegbaren Bearbeitungsvorrichtung (3) durchgeführt wird, mit den Schritten:
- Festlegen zumindest eines Referenzpunkts einer digitalen Rohling-Kontur (R) des Rohlings (2),
- Festlegen einer digitalen Werkstück-Kontur (W) des zumindest einen dentalen Werkstücks (1),
- Platzieren der digitalen Werkstück-Kontur (W) relativ zum Referenzpunkt, insbesondere in der digitalen Rohling-Kontur (R),
- Freistellen eines Freistellbereichs (F) um die digitale Werkstück-Kontur (W) und
- Platzieren zumindest eines digitalen Verbindungsstegs (V) im Freistellbereich (F), wobei der zumindest eine Verbindungssteg (V) mit der digitalen Werkstück-Kontur (W) über eine Übergangsstelle (Ü) verbunden ist,
**gekennzeichnet durch** den Schritt:
- Ermitteln einer Position (P) an der digitalen Werkstück-Kontur (W) für die Übergangsstelle (Ü), sodass in einer grafischen Darstellung die Übergangsstelle (Ü) in einer parallel zur Bearbeitungsachse (Z) der Bearbeitungsvorrichtung (3) ausgerichteten Sichtlinie (S) von der Oberseite (O) her und von der Unterseite (U) her sichtbar ist, wobei das Platzieren des zumindest einen digitalen Verbindungsstegs (V) in Abhängigkeit der ermittelten Position (P) derart erfolgt, dass der digitale Verbindungssteg (V) mit der digitalen Werkstück-Kontur (W) an der ermittelten Position (P) verbunden wird.

2. Verfahren nach Anspruch 1, **gekennzeichnet durch** den Schritt Erstellen einer digitalen Bearbeitungs-Datei (B), welche zumindest den Referenzpunkt der digitalen Rohling-Kontur (R), die digitale Werkstück-Kontur (W), den zumindest einen digitalen Verbindungssteg (V) und die relativen Positionsdaten (Pᵣₑₗ) der Werkstück-Kontur (W), des zumindest einen digitalen Verbindungsstegs (V) und zumindest des Referenzpunkts der digitalen Rohling-Kontur (R), vorzugsweise der gesamten Rohling-Kontur (R), zueinander enthält.

3. Verfahren nach Anspruch 2, **gekennzeichnet durch** den Schritt Erzeugen, vorzugsweise Fräsen, des dentalen Werkstücks (1) durch die zumindest entlang der Bearbeitungsachse (Z) bewegbare Bearbeitungsvorrichtung (3) aus einem in einer Haltevorrichtung (10) eingespannten Rohling (2) auf Basis der Bearbeitungs-Datei (B).

4. Verfahren nach wenigstens einem der vorangegangenen Ansprüche, **dadurch gekennzeichnet, dass** der zumindest eine digitale Verbindungssteg (V) die digitale Werkstück-Kontur (W) mit der digitalen Rohling-Kontur (R) verbindet.

5. Verfahren nach wenigstens einem der vorangegangenen Ansprüche, **dadurch gekennzeichnet, dass** der Rohling (2) eine quer, vorzugsweise rechtwinkelig, zur Oberseite (O) und/oder zur Unterseite (U) ausgerichtete Hauptachse (H) aufweist, wobei die Hauptachse (H) parallel zur Bearbeitungsachse (Z) ausgerichtet ist.

6. Verfahren nach wenigstens einem der vorangegangen Ansprüche, **dadurch gekennzeichnet, dass** die digitale Werkstück-Kontur (W) eine, vorzugsweise parallel zur Bearbeitungsachse (Z) ausgerichtete, zentrale Längsachse (L) aufweist.

7. Verfahren nach Anspruch 6, **dadurch gekennzeichnet, dass** der zumindest eine Verbindungssteg (V) an einer Stelle der digitalen Werkstück-Kontur (W) platziert wird, welche an einem Umfang einer durch die zentrale Längsachse (L) führenden Schnittfläche durch die digitale Werkstück-Kontur (W) angeordnet ist und einen Maximalabstand (M) zur zentralen Längsachse (L) der digitalen Werkstück-Kontur (W) aufweist.

8. Verfahren nach wenigstens einem der vorangegangenen Ansprüche, **dadurch gekennzeichnet, dass** die Schritte Freistellen des Freistellbereichs (F) und Platzieren des zumindest einen Verbindungsstegs (V) gleichzeitig erfolgen.

9. Verfahren nach wenigstens einem der vorangegangenen Ansprüche, **dadurch gekennzeichnet, dass** der wenigstens eine digitale Verbindungssteg (V) als, vorzugsweise gewölbter, Verbindungsring ausgebildet ist, welcher die digitale Werkstück-Kontur (W) ringförmig umgibt.

10. Verfahren nach Anspruch 9, **dadurch gekennzeichnet, dass** der Verbindungsring über eine ringförmige Übergangsstelle (Ü) voll umfänglich an der digitalen Werkstück-Kontur (W) anliegt.

11. Verfahren nach einem der vorangegangenen Ansprüche, **dadurch gekennzeichnet, dass** der maximale Abstand (Aₘₐₓ) zwischen digitaler Rohling-Kontur (R) und der Übergangsstelle (Ü) - gemessen rechtwinkelig zur Bearbeitungsachse (Z) - 5 mm, vorzugsweise 3 mm, beträgt.

12. Verfahren nach wenigstens einem der vorangegangenen Ansprüche, **dadurch gekennzeichnet, dass** das Verhältnis des rechtwinkelig zur Bearbeitungsachse (Z) gemessenen, maximalen Abstands (Aₘₐₓ) zwischen der Übergangsstelle (Ü) und der digitalen Rohling-Kontur (R) zum rechtwinkelig zur Bearbeitungsachse (Z) gemessenen, maximalen Durchmesser (Dₘₐₓ) der digitalen Werkstück-Kontur (W) bei zumindest 1 zu 2, vorzugsweise bei zumindest 1 zu 3, liegt.

13. Vorrichtung (4) zum Herstellen eines dentalen Werkstücks (1) aus einem eine Oberseite (O) und eine Unterseite (U) aufweisenden Rohling (2), mit einem Verfahren nach einem der Ansprüche 1 bis 12, mit einer Steuer- oder Regeleinheit (5) und einer Bearbeitungsvorrichtung (3), welche zumindest entlang einer Bearbeitungsachse (Z) bewegbar ist, wobei
- in einem Festlegungs-Betriebsmodus (BM_{fest}) der Steuer- oder Regeleinheit (5) zumindest ein Referenzpunkt einer digitalen Rohling-Kontur (R) und eine digitale Werkstück-Kontur (W) festlegbar ist,
- in einem Platzierungs-Betriebsmodus (BM_{platz}) der Steuer- oder Regeleinheit (5) die digitale Werkstück-Kontur (W) relativ zum Referenzpunkt, insbesondere in der digitalen Rohling-Kontur (R), platzierbar ist,
- in einem Freistell-Betriebsmodus (BM_{frei}) der Steuer- oder Regeleinheit (5) ein Freistellbereich (F) um die digitale Werkstück-Kontur (W) erzeugbar ist und
- in einem Verbindungsstegplatzierungs-Betriebsmodus (BM_{steg}) der Steuer- oder Regeleinheit (5) zumindest ein digitaler Verbindungssteg (V) im Freistellbereich (F) platzierbar ist, wobei der zumindest eine Verbindungssteg (V) mit der digitalen Werkstück-Kontur (W) über eine Übergangsstelle (Ü) verbunden ist,
**dadurch gekennzeichnet, dass**
- in einem Positionsermittlungs-Betriebsmodus (BMₑᵣₘᵢₜ) der Steuer- oder Regeleinheit (5) die Position (P) der Übergangsstelle (Ü) an der Werkstück-Kontur (W) ermittelbar ist, sodass in einer grafischen Darstellung die Übergangsstelle (Ü) in einer parallel zur Bearbeitungsachse (Z) der Bearbeitungsvorrichtung (3) ausgerichteten Sichtlinie (S) von der Oberseite (O) her und von der Unterseite (U) her sichtbar ist, wobei im Verbindungsstegplatzierungs-Betriebsmodus (BM_{steg}) der Steuer oder Regeleinheit (5) in Abhängigkeit der ermittelten Position (P) der digitale Verbindungssteg (V) mit der digitalen Werkstück-Kontur (W) an der ermittelten Position (P) verbindbar ist.

14. Vorrichtung nach Anspruch 13, **dadurch gekennzeichnet, dass** in einem Dateierstellungs-Betriebsmodus (BM_{datei}) der Steuer- oder Regeleinheit (5) eine digitale Bearbeitungs-Datei (B) erstellbar ist, welche zumindest den Referenzpunkt der digitalen Rohling-Kontur (R), die digitale Werkstück-Kontur (W), den zumindest einen digitalen Verbindungssteg (V) und die relativen Positionsdaten (Pᵣₑₗ) der Werkstück-Kontur (W), des zumindest einen digitalen Verbindungsstegs (V) und zumindest des Referenzpunkts der digitalen Rohling-Kontur (R), vorzugsweise der gesamten digitalen Rohling-Kontur (R), zueinander enthält.

15. Vorrichtung nach Anspruch 14, **dadurch gekennzeichnet, dass** der Rohling (2) in einer Haltevorrichtung (10) einspannbar ist, wobei das dentale Werkstück (1) auf Basis der Bearbeitungs-Datei (B) von der Bearbeitungsvorrichtung (3) aus dem Rohling (2) herausarbeitbar ist.

## Claims

1. A method for producing a dental work piece (1) from a blank (2) which has an upper side (O) and a bottom side (U), wherein the method is carried out by using a machining device (3) which is movable along at least a machining axis (Z), with the steps:
- establishing at least one reference point of a digital blank contour (R) of the blank (2),
- establishing a digital work piece contour (W) of the at least one dental work piece (1),
- placing the digital work piece contour (W) relative to the reference point, in particular in the digital blank contour (R),
- omitting an omitting region (F) around the digital work piece contour (W) and
- placing at least one digital connection crosspiece (V) in the omitting region (F), wherein the at least one connection crosspiece (V) is connected to the digital work piece contour (W) via a transitions area (Ü),
**characterized by** the step:
- determining a position (P) on the digital workpiece contour (W) für the transition area (U), so that in a graphical illustration the transition area (Ü) is visible from the upper side (O) and the bottom side (U) in a line of sight which is parallel to the machining axis (Z) of the machining device (3), wherein the placing of the at least one digital connection crosspiece (V) is carried out in dependence on the determined position (P) in such a way that the digital connection crosspiece (V) is connected to the digital workpiece contour (W) on the determined position (P).

2. The method according to claim 1, **characterized by** the step creating a digital machining data file (B) which comprises the reference point of the digital blank contour (R), the digital work piece contour (W), the at least one digital connection crosspiece (V), and the relative position data (Pᵣₑₗ) of the work piece contour (W), the at least one digital connection crosspiece (V) and the at least one reference point of the digital blank contour (R), preferably the whole blank contour (R), to each other.

3. The method according to claim 2, **characterized by** the step generating, preferably milling, the dental work piece (1) by the machining device (3) being movable at least along the machining axis (Z) from a blank (2) fixed in a holding device (10) on the basis of the machining data file (B).

4. The method according to at least one of the previous claims, **characterized in that** the at least one digital connection crosspiece (V) connects the digital work piece contour (W) with the digital blank contour (R).

5. The method according to at least one of the previous claims, **characterized in that** the blank (2) comprises a main axis (H) which is oriented transverse, preferably rectangular, to the upper side (O) and/or the bottom side (U), wherein the main axis (H) is oriented parallel to the machining axis (Z).

6. The method according to at least one of the previous claims, **characterized in that** the digital workpiece contour (W) comprises a central longitudinal axis (L), preferably being oriented parallel to the machining axis (Z).

7. The method according to claim 6, **characterized in that** the at least one connection crosspiece (V) is placed on a position of the digital work piece contour (W), this position being arranged on a circumference of a cross plane through the digital work piece contour (W), the cross plane leading through the central axis (L), and this position comprising a maximal distance (M) to the central longitudinal axis (L) of the digital work piece contour (W).

8. The method according to at least one of the previous claims, **characterized in that** the steps omitting the omitting region (F) and placing the at least one connection crosspiece (V) are carried out simultaneously.

9. The method according to at least one of the previous claims, **characterized in that** the at least one digital connection crosspiece (V) is formed as a, preferably convex, connection ring which surrounds the digital work piece contour (W) in the form of a ring.

10. The method according to claim 9, **characterized in that** the connection ring circumferentially abuts the digital work piece contour (W) via a ringshaped transition area (Ü).

11. The method according to at least one of the previous claims, **characterized in that** the maximal distance (Aₘₐₓ) between the digital blank contour (R) and the transition area (Ü) - measured rectangular to the machining axis (Z) - is 5 mm, preferably 3 mm.

12. The method according to at least one of the previous claims, **characterized in that** the relation of the maximal distance (Aₘₐₓ) measured rectangular to the machining axis (Z) between the transition area (Ü) and the digital blank contour (R) to the maximal diameter (Dₘₐₓ) measured rectangular to the machining axis (Z) of the digital work piece contour (W) is at least 1 to 2, preferably at least 1 to 3.

13. A device (4) for producing a dental work piece (1) from a blank (2) which comprises an upper side (O) and a bottom side (U), in a method according to one of the claims 1 to 12, the device (4) comprising a closed loop or open loop control unit (5) and a machining device (3) which is movable at least along a machining axis (Z), wherein
- in an establishing operating mode (BM_{fest}) of the closed loop or open loop control unit (5) at least one reference point of a digital blank contour (R) and a digital work piece contour (W) can be established,
- in a placing operating mode (BM_{platz}) of the closed loop or open loop control unit (5) the digital work piece contour (W) can be placed relative to the reference point, in particular in the blank contour (R),
- in an omitting operating mode (BM_{frei}) of the closed loop or open loop control unit (5) an omitting region (F) can be generated around the digital work piece contour (W) and
- in a connection crosspiece placing operating mode (BM_{steg}) of the closed loop or open loop control unit (5) at least one digital connection crosspiece (V) can be placed in the omitting region (F), wherein the at least one connection crosspiece (V) is connected to the digital work piece contour (W) via a transition area (Ü),
**characterized in that**
- in a position determining operating mode (BMₑᵣₘᵢₜ) of closed loop or open loop control unit (5) the position (P) of the transition area (Ü) on a work piece contour (W) can be determined so that in a graphical illustration the transition area (Ü) is visible from the upper side (O) and the bottom side (U) in a line of sight which is parallel to the machining axis (Z) of the machining device (3), wherein in the connection crosspiece placing operating mode (BM_{steg}) of the closed loop or open loop control unit (5) in dependence of the determined position (P) the digital connection crosspiece (V) can be connected to the digital work piece contour (W) on the determined position (P).

14. The device according to claim 13, **characterized in that** in a data file establishing operating mode (BM_{datei}) of the closed loop or open loop control unit (5) a digital machining data file (B) can be created which comprises the reference point of the digital blank contour (R), the digital work piece contour (W), the at least one digital connection crosspiece (V), and the relative position data (Pᵣₑₗ) of the work piece contour (W), the at least one digital connection crosspiece (V) and the at least one reference point of the digital blank contour (R), preferably the whole blank contour (R), to each other.

15. The device according to claim 14, **characterized in that** the blank (2) can be fixed in a holding device (10), wherein the dental work piece (1) can be machined out of the blank (2) by the machining device (3) on the basis of the machining data file (B).

## Revendications

1. Procédé servant à fabriquer une pièce dentaire (1) à partir d'une ébauche (2), qui présente une face supérieure (O) et une face inférieure (U), dans lequel le procédé est réalisé en utilisant un dispositif d'usinage (3) pouvant être déplacé au moins le long d'un axe d'usinage (Z), avec les étapes :
- de fixation d'au moins un point de référence d'un contour d'ébauche (R) numérique de l'ébauche (2),
- de fixation d'un contour de pièce (W) numérique de l'au moins une pièce (1) dentaire,
- de placement du contour de pièce (W) numérique par rapport au point de référence, en particulier dans le contour d'ébauche (R) numérique,
- de dégagement d'une zone de dégagement (F) autour du contour de pièce (W) numérique, et
- de placement d'au moins une nervure de liaison (V) numérique dans la zone de dégagement (F), dans lequel l'au moins une nervure de liaison (V) est reliée au contour de pièce (W) numérique par l'intermédiaire d'un emplacement de transition (Ü),
**caractérisé par** l'étape :
- de détermination d'une position (P) sur le contour de pièce (W) numérique pour l'emplacement de transition (Ü) de sorte que, sur une représentation graphique, l'emplacement de transition (Ü) est visible dans une ligne de visée (S) orientée de manière parallèle à l'axe d'usinage (Z) du dispositif d'usinage (3) depuis la face supérieure (O) et depuis la face inférieure (U), dans lequel le placement de l'au moins une nervure de liaison (V) numérique est effectué en fonction de la position (P) déterminée de telle manière que la nervure de liaison (V) numérique est reliée au contour de pièce (W) numérique à la position (P) déterminée.

2. Procédé selon la revendication 1, **caractérisé par** l'étape de création d'un fichier d'usinage (B) numérique, lequel contient au moins le point de référence du contour d'ébauche (R) numérique, le contour de pièce (W) numérique, l'au moins une nervure de liaison (V) numérique et les données de position relatives (Pᵣₑₗ) du contour de pièce (W), de l'au moins une nervure de liaison (V) numérique et au moins du point de référence du contour d'ébauche (R) numérique, de préférence de l'ensemble du contour d'ébauche (R), les uns par rapport aux autres.

3. Procédé selon la revendication 2, **caractérisé par** l'étape de la production, de préférence du fraisage, de la pièce (1) dentaire par l'au moins un dispositif d'usinage (3) pouvant être déplacé le long de l'axe d'usinage (Z) à partir d'une ébauche (2) enserrée dans un dispositif de maintien (10) sur la base du fichier d'usinage (B).

4. Procédé selon au moins l'une quelconque des revendications précédentes, **caractérisé en ce que** l'au moins une nervure de liaison (V) numérique relie le contour de pièce (W) numérique au contour d'ébauche (R) numérique.

5. Procédé selon au moins l'une quelconque des revendications précédentes, **caractérisé en ce que** l'ébauche (2) présente un axe principal (H) orienté de manière oblique, de préférence à angle droit, par rapport à la face supérieure (O) et/ou par rapport à la face inférieure (U), dans lequel l'axe principal (H) est orienté de manière parallèle à l'axe d'usinage (Z).

6. Procédé selon au moins l'une quelconque des revendications précédentes, **caractérisé en ce que** le contour de pièce (W) numérique présente un axe longitudinal (L) central orienté de préférence de manière parallèle à l'axe d'usinage (Z).

7. Procédé selon la revendication 6, **caractérisé en ce que** l'au moins une nervure de liaison (V) est placée à un emplacement du contour de pièce (W) numérique, lequel est disposé à une périphérie d'une face de coupe menant au-delà de l'axe longitudinal (L) central à travers le contour de pièce (W) numérique, et est à une distance maximale (M) de l'axe longitudinal (L) central du contour de pièce (W) numérique.

8. Procédé selon au moins l'une quelconque des revendications précédentes, **caractérisé en ce que** les étapes de dégagement de la zone de dégagement (F) et de placement de l'au moins une nervure de liaison (V) sont effectuées de manière simultanée.

9. Procédé selon au moins l'une quelconque des revendications précédentes, **caractérisé en ce que** l'au moins une nervure de liaison (V) numérique est réalisée en tant qu'une bague de liaison, de préférence bombée, laquelle entoure le contour de pièce (W) numérique de manière à présenter une forme annulaire.

10. Procédé selon la revendication 9, **caractérisé en ce que** la bague de liaison repose totalement en périphérie sur le contour de pièce (W) numérique par l'intermédiaire d'un emplacement de transition (Ü) de forme annulaire.

11. Procédé selon l'une quelconque des revendications précédentes, **caractérisé en ce que** la distance maximale (Aₘₐₓ) entre le contour d'ébauche (R) numérique et l'emplacement de transition (Ü) - mesurée à angle droit par rapport à l'axe d'usinage (Z) - est de 5 mm, de préférence de 3 mm.

12. Procédé selon au moins l'une quelconque des revendications précédentes, **caractérisé en ce que** le rapport entre la distance maximale (Aₘₐₓ), mesurée à angle droit par rapport à l'axe d'usinage (Z), entre l'emplacement de transition (Ü) et le contour d'ébauche (R) numérique, et le diamètre maximal (Dₘₐₓ), mesuré à angle droit par rapport à l'axe d'usinage (Z), du contour de pièce (W) numérique, est de l'ordre d'au moins 1 à 2, de préférence de l'ordre d'au moins 1 à 3.

13. Dispositif (4) servant à fabriquer une pièce (1) dentaire à partir d'une ébauche (2) présentant une face supérieure (O) et une face inférieure (U), avec un procédé selon l'une quelconque des revendications 1 à 12, avec une unité de commande ou de régulation (5) et un dispositif d'usinage (3), lequel peut être déplacé au moins le long d'un axe d'usinage (Z), dans lequel
- au moins un point de référence d'un contour d'ébauche (R) numérique et un contour de pièce (W) numérique peuvent être fixés dans un mode de fonctionnement de fixation (BM_{fest}) de l'unité de commande ou de régulation (5),
- le contour de pièce (W) numérique peut être placé par rapport au point de référence, en particulier dans le contour d'ébauche (R) numérique, dans un mode de fonctionnement de placement (BM_{platz}),
- une zone de dégagement (F) autour du contour de pièce (W) numérique peut être produite dans un mode de fonctionnement de dégagement (BM_{frei}) de l'unité de commande ou de régulation (5), et
- au moins une nervure de liaison (V) numérique peut être placée dans la zone de dégagement (F) dans un mode de fonctionnement de placement de nervure de liaison (BM_{steg}) de l'unité de commande ou de régulation (5), dans lequel l'au moins une nervure de liaison (V) est reliée au contour de pièce (W) numérique par l'intermédiaire d'un emplacement de transition (Ü),
**caractérisé en ce que**
- la position (P) de l'emplacement de transition (Ü) sur le contour de pièce (W) peut être déterminée dans un mode de fonctionnement de détermination de position (BMₑᵣₘᵢₜ) de l'unité de commande ou de régulation (5) de sorte que, sur une représentation graphique, l'emplacement de transition (Ü) est visible dans une ligne de visée (S) orientée de manière parallèle à l'axe d'usinage (Z) du dispositif d'usinage (3) depuis la face supérieure (O) et depuis la face inférieure (U), dans lequel la nervure de liaison (V) numérique peut être reliée au contour de pièce (W) numérique à la position (P) déterminée dans le mode de fonctionnement de placement de nervure de liaison (BM_{steg}) de l'unité de commande ou de régulation (5) en fonction de la position (P) déterminée.

14. Dispositif selon la revendication 13, **caractérisé en ce que** dans un mode de fonctionnement de création de fichier (BM_{datei}) de l'unité de commande ou de régulation (5), un fichier d'usinage (B) numérique peut être créé, lequel contient au moins le point de référence du contour d'ébauche (R) numérique, le contour de pièce (W) numérique, l'au moins une nervure de liaison (V) numérique et les données de position relatives (Pᵣₑₗ) du contour de pièce (W), de l'au moins une nervure de liaison (V) numérique et au moins du point de référence du contour d'ébauche (R) numérique, de préférence de l'ensemble du contour d'ébauche (R) numérique les uns par rapport aux autres.

15. Dispositif selon la revendication 14, **caractérisé en ce que** l'ébauche (2) peut être enserrée dans un dispositif de maintien (10), dans lequel la pièce (1) dentaire peut être travaillée par le dispositif d'usinage (3) à partir de l'ébauche (2) sur la base du fichier d'usinage (B).
